(19) Europäisches Patentamt
European Patent Office
Office européen des brevets

(11) Veröffentlichungsnummer: **0 033 295**
**B1**

# (12) EUROPÄISCHE PATENTSCHRIFT

(45) Veröffentlichungstag der Patentschrift: **15.07.87**

(51) Int. Cl.[4]: **H 01 B 17/60,** H 02 K 3/30

(21) Anmeldenummer: **81730001.5**

(22) Anmeldetag: **06.01.81**

(54) **Isolierband zur Herstellung einer mit einer Heisshärtenden Epoxidharz-Säureanhydrid-Mischung imprägnierten Isolierhülse für elektrische Leiter.**

(30) Priorität: **29.01.80 DE 3003477**

(43) Veröffentlichungstag der Anmeldung:
**05.08.81 Patentblatt 81/31**

(45) Bekanntmachung des Hinweises auf die Patenterteilung:
**15.07.87 Patentblatt 87/29**

(84) Benannte Vertragsstaaten:
**AT CH FR GB LI SE**

(56) Entgegenhaltungen:
**AT - B - 314 035**
**DE - A - 2 811 764**
**DE - B - 1 162 898**
**US - A - 2 261 002**
**US - A - 2 949 441**
**US - A - 3 533 987**
**US - A - 3 868 613**

**PATENTS ABSTRACTS OF JAPAN, unexamined applications, C-Sektion, Vol. 1, Nr. 48, 11. Mai 1977 THE PATENT OFFICE JAPANESE GOVERNMENT, Seite 34 C 77**

(73) Patentinhaber: **Siemens Aktiengesellschaft Berlin und München, Wittelsbacherplatz 2, D-8000 München 2 (DE)**

(72) Erfinder: **Ihlein, Walter, Dr., Glockenturmstrasse 36, D-1000 Berlin 19 (DE)**

**EP 0 033 295 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Isolierband zur Herstellung einer mit einer heisshärtenden Epoxidharz-Säureahydridhärter-Mischung imprägnierten Isolierhülse für elektrische Leiter, insbesondere für die Wicklungsstäbe bzw. Spulen elektrischer Maschinen, bestehend aus auf eine flexible Unterlage aufgebrachtem, flächigem, durchschlagsfestem anorganischen Material, wie z.B. Glimmerblättchen oder Feinglimmerschichten, das mit der Unterlage und miteinander und gegebenenfalls mit einer abschliessenden Decklage mittels eines Bindemittels verklebt ist, das einen die Härtungsreaktion des Tränkharzgemisches anregenden Beschleuniger enthält, wobei die Bindemittel-Beschleuniger-Mischung ein bei der Aushärtetemperatur des Tränkharzes selbsthärtendes System bildet.

Ein derartiges Isolierband, wie es aus der DE-PS 1 801 053 bekannt ist, ermöglicht die wirtschaftliche Durchführung der Tränkung, weil eine reaktionsträge Tränkharzmischung verwendet werden kann, die auch bei den eine gute Durchimprägnierung der Isolierhülse gewährleistenden hohen Tränktemperaturen praktisch keiner Veränderung der Viskosität unterliegt. Dies ist erforderlich, weil jeweils nur ein geringer Anteil der als Tränkharz verwendeten Epoxidharz-Säureanhydrid-Mischung in die Isolierhülse eindringt, während der Rest wieder für neue Tränkungen verwendet werden muss. Das Isolierband enthält deshalb einen die Härtungsreaktion des Tränkharzgemisches anregenden Beschleuniger, damit der in die Isolierhülse eingedrungene Tränkharzanteil in wirtschaftlich vertretbarer Zeit aushärtet.

Damit die Isolierbänder vor der Tränkung lange gelagert werden können, ist bei dem bekannten Isolierband die Bindemittel-Beschleuniger-Mischung so gewählt, dass bei Raumtemperatur praktisch keine Härtung dieser Mischungen eintritt. Ausserdem bildet die Bindemittel-Beschleuniger-Mischung ein selbsthärtendes System, das allerdings erst bei den wesentlich über der Raumtemperatur liegenden Aushärtetemperaturen des Tränkharzes selbsthärtet. Dadurch wird vermieden, dass zwischen grossflächigen Schichten des durchschlagsfesten anorganischen Materials eingedrungenes Bindemittel, das nicht vollständig vom Tränkharz resorbiert werden konnte, ungehärtet in der Isolierung verbleibt.

Bei den bekannten Isolierbändern werden als Bindemittel cycloaliphatische Epoxidharze verwendet, bei denen die Epoxidgruppen durch Sauerstoffanlagerung an ringständige Doppelbindungen entstanden sind und die, wie allgemein bekannt, mit Aminhärtern bzw. Beschleunigern keine bzw. eine stark verzögerte Reaktion zeigen. Bei Zusatz des Epoxidharz-Säureanhydridhärter-Tränkharzes entwickeln diese Beschleuniger jedoch ihre volle katalytische Aktivität; Glycidyläther-, Glycidylester- oder N-Glycidyl-Epoxidharze zeigen diese unterschiedlichen Reaktivitäten nicht. Cycloaliphatische Epoxidharze lassen sich aber nur schwierig herstellen und haben ausserdem den Nachteil, dass diese Verbindungen nach neueren Untersuchungen physiologisch nicht unbedenklich sind.

Der Erfindung liegt daher die Aufgabe zugrunde, für Isolierbänder der eingangs beschriebenen Art ein Bindemittel-Beschleunigersystem zu schaffen, das für alle Epoxidharze und nicht nur für cycloaliphatische Epoxidharze wirksam ist.

Zur Lösung dieser Aufgabe sind bei dem Isolierband der eingangs beschriebenen Art gemäss der Erfindung dem als Bindemittel verwendeten Epoxidharz quaternäre Oniumsalze als Beschleuniger zugesetzt. Die Verwendung quaternärer organischer Oniumsalze als Beschleuniger im Bindemittel-Beschleuniger-Gemisch eines zur Tränkung mit Epoxidharz-Säureanhydrid-Mischungen bestimmten Isolierbandes hat aber den überraschenden Vorteil, dass quaternäre Oniumsalze bei Epoxidverbindungen bei Raumtemperatur praktisch keine ionische Polymerisation bewirken. Ein gemäss der Erfindung aufgebautes Isolierband kann deshalb bei Raumtemperatur bis zu mehr als drei Monate ohne Veränderung seiner Eigenschaften gelagert werden. Andererseits bewirken die quaternären Oniumsalze jedoch, dass die Gelierung einer Epoxidharz-Säureanhydrid-Mischung bereits bei Temperaturen um 60 °C angeregt und wesentlich beschleunigt wird, so dass es möglich ist, den in die Isolierhülse eingedrungenen Tränkharzanteil in wirtschaftlich kurzer Zeit auszuhärten.

Das so gegebene Bindemittel-Beschleunigersystem bleibt mit Sicherheit unter den Bedingungen des Trocknens und Vorwärmens der aus den Isolierbändern gewickelten Isolierhülsen vor der Tränkung der Isolierungen voll im Tränkharz löslich, ohne einen Abfall in der Reaktivität gegenüber dem beim Tränkprozess in die Isolierhülse eindringenden Tränkharz aufzuweisen.

Die Verwendung quaternärer Oniumsalze als latente Katalysatoren bei Epoxidharz-Säureanhydridhärter-Mischungen ist an sich aus der DE-OS 2 505 234 bekannt. Dort sind Ein-Komponenten-Giessharzmischungen beschrieben, die jedoch im Unterschied sowohl das Epoxidharz als auch den Säureanhydridhärter und Beschleuniger enthalten und denen ausserdem noch zur Verlängerung der Lagerfähigkeit Stabilisatoren, z.B. in Form von Carbonsäure, zugesetzt sind.

Bei dem gemäss der Erfindung ausgebildeten Isolierband können als Bindemittel folgende Epoxidharze verwendet werden:

Epoxyverbindungen wie Bisphenol A-Diglycidyläther, Bisphenol F-Diglycidyläther, Resorcin-Diglycidyläther, epoxidierte Phenol- bzw. Kresolnovolake sowie N-Glycidylverbindungen, wie z.B. heterocyclische Epoxidverbindungen auf Hydantoinbasis. Weitere Epoxide sind in dem «Handbook of Epoxy Resin» von H. Lee und K. Neville (Mc. Craw Hill Book Co., 1967) aufgeführt. Besonders vorteilhaft ist die Verwendung höher funktioneller epoxidierter Phenol- oder Kresolnovolake und Hydantoinepoxidharze, die aufgrund ihrer hohen Viskosität und Klebkraft ausgezeichnete Bindemittel für die vorgesehenen Isolierbänder sind.

Es ist vorteilhaft, dass das Bindemittel quaternäre Oniumsalze folgender allgemeiner Strukturformel

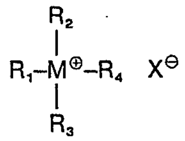

enthält, wobei

M Atome der 5. Hauptgruppe des Period. Systems bedeuten, insbesondere N und P

$R_1$, $R_2$, $R_3$ und $R_4$ gleiche oder verschiedene aliphatische (diese können noch weitere quartäre Atome enthalten), aromatische, heterocyclische oder arylaliphatische Reste bedeuten und in denen 3-Reste gemeinsam oder auch paarweise heterocyclischen Ringen angehören können und

$X^{\ominus}$ ein Anion, wie $Cl^{\ominus}$, $Br^{\ominus}$, $J^{\ominus}$, $F^{\ominus}$, $NO^{\ominus}_3$, $ClO^{\ominus}_4$ ein organ. Säurerest, wie Acetat, ... oder ein komplexes Anion, wie z.B. $BF^{\ominus}_4$, $PF^{\ominus}_6$, ...

ist, weil diese besonders wirksam sind. In der Bindemittel-Beschleuniger-Mischung können auch polymere quaternäre Oniumsalze enthalten sein, wie sie in der DE-OS 2 657 582 beschrieben sind.

Für die Bindemittel-Beschleuniger-Mischung geeignete quaternäre Oniumsalze sind:

Benzyl-Dimethylhexadecylammoniumchlorid, Benzyl-Dimethyltetradecylammoniumchlorid, Benzyl-Triäthylammoniumchlorid, Benzyl-Triäthylammoniumbromid, Tetrabutylammoniumchlorid, Tetrabutylammoniumbromid, Tetrabutylammoniumnitrat etc.

Hexadecylpyridiniumchlorid, Hexadecylpyridiniumbromid, Äthyl-Pyridiniumbromid, 1.1'Äthylenbis(pyridiniumbromid) etc.

1-Methyl-3 Dodecylimidazoliumchlorid, 1-Methyl-3 Dodecylimidazoliumbromid, 1.2.Dimethyl-3-Benzylimidazoliumchlorid, 1.2.Dimethyl-3-Benzylimidazoliumbromid etc.

Tetraphenyl-Phosphoniumchlorid, Tetraphenyl-Phosphoniumbromid, Tetrabutyl-Phosphoniumchlorid etc.

Tetraphenylarsoniumchlorid, Triphenylmethylarsoniumbromid etc., wobei die Reaktivität der einzelnen Verbindungen mit zunehmender Anionengrösse abnimmt.

Der Anteil an Bindemittel wird bei der Herstellung des Isolierbandes nicht zu hoch gewählt, damit das Tränkharz bei der Imprägnierung gut in die im Band befindlichen Hohlräume eindringen kann. Der Gewichtsanteil der als Bindemittel zur Verklebung des Isolierbandes verwendeten Verbindungen liegt deshalb etwa zwischen 3 und 10%, bezogen auf das Gesamtgewicht des Isolierbandes. Bei einem solchen Anteil an Bindemittel empfiehlt es sich, die Menge des Beschleunigers etwa in der Grössenordnung 0,05 bis 3%, bezogen auf das Gesamtgewicht des Isolierbandes, festzusetzen. Die Menge des dem Isolierband bei der Herstellung zugesetzten Beschleunigers hängt davon ab, wieviel anorganisches Material, z.B. Glimmer, pro Unterlage das Band enthält und wie hoch der Anteil des zur Verklebung verwendeten Bindemittels im Isolierband ist.

Eine weitere Verbesserung der aus Isolierbändern gemäss der Erfindung aufgebauten Isolierungen, die eine hohe Steifigkeit aufweisen, ist dadurch möglich, dass das Bindemittel-Beschleuniger-Gemisch als Härter wirkende Beimengungen entält, die erst bei Aushärtetemperatur der heisshärtenden Epoxidharz-Säureanhydrid-Mischung wirksam werden. Dadurch wird die Wärmeformbeständigkeit des selbsthärtenden Bindemittels weiter erhöht. Diese Beimengungen beeinträchtigen jedoch nicht die Lagerfähigkeit des Isolierbandes. Auch dieses Bindemittel-Beschleuniger-Gemisch mit Beimengungen bleibt unter den Bedingungen des Trocknens und Vorwärmens vor der Tränkung der Isolierung voll im Tränkharz löslich.

Besonders geeignet sind als Härter wirkende Beimengungen, die bis angenähert 80°C im Bindemittel unlöslich sind und bezogen auf die Aushärtetemperatur einen genügend hohen Schmelzpunkt haben, wie z.B. das 2-Phenyl-4.5 Dihydroxymethylimidazol. Derartige Beimengungen zeigen erst bei den Temperaturen der Aushärtung ihre Aktivität, während das Gelieren des in die Isolierhülse eindringenden Tränkharzes im Temperaturbereich um 60°C durch die im Bindemittel ebenfalls vorhandenen quaternären Oniumverbindungen angeregt wird.

Als Beimengungen sind ferner Komplexverbindungen oder Addukte geeignet, die erst bei den Temperaturen der Aushärtung in härtungswirksame Komponenten zerfallen. Dies sind Verbindungen, wie sie in der DE-OS 2 811 764 beschrieben werden, oder Salze von Trimellitsäure mit Imidazolen, wie z.B. 1-Cyanoäthyl-2-Methylimidazol-Trimellitat.

Es ist ferner zweckmässig, als Beimengungen eingekapselte oder an Stoffen mit grosser aktiver Oberfläche adsorbierte Härtersysteme zu verwenden, die erst bei Aushärtetemperaturen oder durch Austausch mit anderen Verbindungen freigegeben und wirksam werden. So können z.B. in Molekularsieben adsorbierte tertiäre Amine verwendet werden.

Die Menge dieser dem Bindemittel zugemischten Härter hängt von deren spezifischer Wirksamkeit ab und umfasst den Bereich zwischen 0,05 bis 10 Gew.% bezogen auf das Bindemittel.

Im folgenden wird das Verhalten von gemäss der Erfindung aufgebauten Isolierbändern anhand der Tabellen 1 bis 3 näher erläutert:

Tabelle 1

| Epoxidharz | Beschleuniger | Gew. T Beschl. auf 100 Gew. T Epoxidharz | Lagerstabilität der Mischungen (inTen) bei R.T. | 70 °C | Gelierzeit bei 130 °C (Std.) |
|---|---|---|---|---|---|
| A | 1 | 15 | nicht bestimmt | > 60 | |
| | 2 | 75 | bei 90 °C nach 18 Tagen abgebrochen | Probe noch niederviskos | 192 |
| B | 1 | 15 | > 100 | 7 | 63 |
| | 2 | 7,5 | > 100 | 40 | 90 |
| | 3 | 10 | > 100 | 28 | 70 |
| | 4 | 10 | > 100 | 12 | 24 |
| | 5 | 10 | > 100 | 52 | 50 |
| | 4 | 10 | > 30 Versuch läuft noch | 30 | 100 |

Die Tabelle 1 enthält eine Zusammenstellung über die Lagerstabilität der in dünnen Schichten in einem offenen Gefäss gelagerten Mischungen dreier charakteristischer Epoxidharztypen A, B, C mit verschiedenen quaternären als Beschleuniger dienenden Verbindungen 1 bis 5. Es handelt sich hierbei um folgende Beschleuniger:

1 Benzyldimethyltetradecylammoniumchlorid
2 Tetrabutylammoniumbromid
3 Hexadecylpyridiniumbromid
4 1-Methyl-3 Benzylimidazoliumchlorid
5 Tetraphenylphosphoniumbromid

Die Verbindungen wurden unter Erwärmen (bei 70 °C) oder mit Hilfe von $MeCl_2$ als Lösungsvermittler in den betreffenden Epoxidharzen A, B und C gelöst, wobei

A einen Glycidyläther des Bisphenol A mit einem Epoxidäquivalent von $174 \pm 2$ und einer Viskosität von $5000 \pm 500$ mPas bei 25 °C bedeutet,

B ein halbfester epoxidierter Phenolnovolak mit einem Epoxidäquivalent von $178 \pm 5$ und einer Viskosität von $1600 \pm 300$ mPas bei 80 °C und

C ein halbfestes trifunktionelles Hydantoinepoxidharz mit einem Epoxidäquivalent von 166 und einer Viskosität von ca. 6000 mPas bei 80 °C.

Aus der Tabelle 1 geht die geringe Wirksamkeit dieser Verbindungen bezüglich einer ionischen Polymerisation im Temperaturbereich von circa 70 bis 80 °C deutlich hervor.

Tabelle 2

| Bindemittel-Beschl.-mischung | Gew. T. Bindemittel-Beschl. Misch. auf 100 Gew. T. Expoidh.-Säureanhyd. | Gelierzeit (Min.) d. Epoxidh.-Säureanhyd. Bindemittel-Beschl. Mischung 70 °C | 90 °C |
|---|---|---|---|
| A 1 | 23 | 150 | 35 |
| B 1 | 23 | 120 | 32 |
| B 2 | 21,5 | 73 | 22 |
| B 3 | 22 | 135 | 30 |
| B 4 | 22 | 23 | 95 |
| B 5 | 22 | 70 | 16 |
| C 4 | 22 | 100 | 20 |

Tabelle 2 zeigt die ausgezeichnete Beschleunigungswirkung dieser Verbindungstypen als Bindemittel-Beschleuniger-Mischung auf Epoxidharz-Säureanhydrid-Mischungen. Die Versuche wurden mit einer Epoxidharz-Säureanhydrid-Mischung von einem Glycidyläther des Bisphenol

A (Epoxidharz A) und einem Methylhexahydrophthalsäureanhydrid durchgeführt.

Die in den Tabellen aufgeführten Beispiele zeigen deutlich die Wirkungen der quaternären Oniumverbindungen als Beschleunigeranteil in einer Bindemittel-Beschleuniger-Mischung eines gemäss der Erfindung ausgebildeten Isolierbandes. Die in den hier beschriebenen Bindemittel-Beschleuniger-Kombination ausgeführten Isolierbänder sind bei Raumtemperatur mehr als 3 Monate lagerfähig und bei der Aushärtung der Isolierhülse nach dem Tränken mit einem Epoxidharz-Säureanhydrid-Gemisch ist durch die besondere Auswahl des Bindemittel-Beschleuniger-Gemisches die Gewähr gegeben, dass alle Stellen ausgehärtet werden, d.h. auch Stellen, an denen das Bindemittel nicht durch das Tränkharz resorbiert wurde, da das Bindemittel-Beschleuniger-Gemisch selbstaushärtend ist. Man erhält somit eine Isolierung mit sehr guten elektrischen Eigenschaften und einer hohen Wärmeformbeständigkeit.

Tabelle 3

| Epoxid-harz | Beschleu-niger | Härter | Gew. T Härter auf 100 Gew. T Epoxidh. | Lagerstabilität d. Mischungen (Tgen) bei RT | 70 °C | Gelierzeit bei 130 °C (Std.) |
|---|---|---|---|---|---|---|
| B | Tetrabutyl- | 1 | 5 | >100 | 7 | 16 |
| | ammonium- | 2 | 5 | >100 | 6 | 12 |
| | bromid | 3 | 5 | >100 | 5 | 10 |
| D | 7,5 Gew. T | 1 | 5 | >100 | 4 | 13 |
| | auf 100 Gew. T | 2 | 5 | 97 | 3 | 10 |
| | Epoxidharz | 3 | 5 | 83 | 3 | ~10 |

Die Tabelle 3 enthält Angaben über die Lagerstabilität von Bindemittel-Mischungen mit einer quaternären Oniumverbindung (Tetrabutylammoniumbromid) als Beschleuniger und einigen spezifischen Härtern als Beimengung für diese Bindemittel-Beschleuniger-Mischung. Auch hier geht deutlich eine bis zum Temperaturbereich von 70°C geringe Reaktivität der Beimengungen auf das Bindemittel des Isolierbandes hervor. Der Vergleich mit Tabelle 1 zeigt für den Temperaturbereich um 70°C eine insgesamt etwas höhere Reaktivität, doch ist bei Raumtemperatur auch hier die ausgezeichnete Stabilität der Mischungen gegeben. Als Bindemittel wurden z.B. das Epoxidharz B und das Epoxidharz D = Tetraglycidyl-p.p'Methylendianilin mit einem Epoxidäquivalent von 130±10 und einer Viskosität von ca. 1800 mPas bei 80°C verwendet. Als Beimengungen dienten die Härter 1 bis 3, wobei:

1: 2.4-Diamino-6(2'Methylimidazolyl-(1')äthyl-s-Triazin
2: 2 Phenyl-4.5. Dihydroxymethylimidazol
3: 1-Cyanoäthyl-2-Phenylimidazol-Trimellitat
bedeutet.

Durch die mit Hilfe der Beimengungen erreichbare Erhöhung des Glaspunktes des gehärteten Bindemittels um ca. 30 bis 40°C wird die Steifigkeit der Isolierhülse weiter erhöht und deren mechanische Festigkeit bei hohen Temperaturen weiter gesteigert.

**Patentansprüche**

1. Isolierband zur Herstellung einer mit einer heisshärtenden Epoxidharz-Säureanhydridhärter-Mischung getränkten Isolierhülse für elektrische Leiter, insbesondere für die Wicklungsstäbe bzw. Spulen elektrischer Maschinen, bestehend aus auf eine flexible Unterlage aufgebrachtem, flächigem, durchschlagsfestem anorganischem Material, wie z.B. Glimmerblättchen oder Feinglimmerschichten, das mit der Unterlage und miteinander und gegebenenfalls mit einer abschliessenden Decklage mittels eines Bindemittels verklebt ist, das einen die Härtungsreaktion des Tränkharzgemisches anregenden Beschleuniger enthält, wobei die Bindemittel-Beschleuniger-Mischung ein bei der Aushärtetemperatur des Tränkharzes selbsthärtendes System bildet, dadurch gekennzeichnet, dass dem als Bindemittel verwendeten Epoxidharz quaternäre Oniumsalze als Beschleuniger zugesetzt sind.

2. Isolierband nach Anspruch 1, dadurch gekennzeichnet, dass das Bindemittel quaternäre Oniumsalze folgender allgemeiner Strukturformel

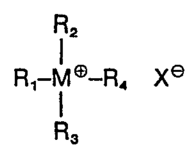

enthält, wobei

M Atome der 5. Hauptgruppe des Period. Systems bedeuten; insbesondere N und P

$R_1$, $R_2$, $R_3$ und $R_4$ gleiche oder verschiedene aliphatische (diese können noch weitere quartäre Atome enthalten), aromatische, heterocyclische oder arylaliphatische Reste bedeuten und in denen 3-Reste gemeinsam oder auch paarweise heterocyclischen Ringen angehören können und

$X^{\ominus}$ ein Anion, wie $Cl^{\ominus}$, $Br^{\ominus}$, $J^{\ominus}$, $F^{\ominus}$, $NO^{\ominus}_3$, $ClO^{\ominus}_4$ ... ein organ. Säurerest, wie Acetat, ... oder ein

komplexes Anion, wie z.B. $BF^{\ominus}_4$, $PF^{\ominus}_6$, . . . ist.

3. Isolierband nach Anspruch 1, dadurch gekennzeichnet, dass das Epoxidharz-Bindemittel polymere, quaternäre Oniumsalze enthält.

4. Isolierband nach Anspruch 1, 2 oder 3, dadurch gekennzeichnet, dass das Epoxidharz-Bindemittel-Beschleuniger-Gemisch als Härter wirkende Beimengungen enthält, die erst bei Aushärtetemperatur der heisshärtenden Epoxidharz-Säureanhydridhärter-Tränkmischung wirksam werden.

5. Isolierband nach Anspruch 4, dadurch gekennzeichnet, dass die Härter-Beimengungen des Epoxidharz-Bindemittels in diesem bis angenähert 80 °C unlöslich sind und bezogen auf die Aushärtetemperatur des Tränkharzes einen genügend hohen Schmelzpunkt haben.

6. Isolierband nach Anspruch 5, dadurch gekennzeichnet, dass die Härter-Beimengung 2-Phenyl-4.5 Dihydroxymethylimidazol ist.

7. Isolierband nach Anspruch 4, dadurch gekennzeichnet, dass die Härter-Beimengungen Komplexverbindungen oder Addukte sind, die erst bei der Aushärtetemperatur des Tränkharzes in härtungswirksame Komponenten zerfallen.

8. Isolierband nach Anspruch 4, dadurch gekennzeichnet, dass die Härter-Beimengungen eingekapselte oder an Stoffen mit grosser aktiver Oberflächen adsorbierte Härtesysteme sind, die erst bei Aushärtetemperatur des Tränkharzes oder durch Austausch mit anderen Verbindungen freigegeben und wirksam werden.

**Claims**

1. An insulating tape for the production of an insulating jacket impregnated with a heat-hardening epoxy resin-acid anhydride hardener mixture, for electrical conductors, particulary but not exclusively for the winding rods and coils of electric machines, said tape consisting of flat, puncture-proof inorganic material, such as, for example, mica sheets or fine mica layers, which are applied to a flexible substrate and are stuck to the substrate and to one another and, where appropriate, to a sealing covering layer by means of a bonding agent which contains an accelerator which stimulates the hardening reaction of the impregnating resin mixture, the bonding agent-accelerator mixture forms a self-hardening system at the hardening temperature of the impregnating resin, characterised in that quaternary onium salts are added as accelerator to the epoxy resin used as bonding agent.

2. An insulating tape as claimed in Claim 1, characterised in that the bonding agent contains quaternary onium salts of the following general structural formula:

$$\begin{array}{c} R_2 \\ | \\ R_1\text{–}M^{\oplus}\text{–}R_4 \quad X^{\ominus} \\ | \\ R_3 \end{array}$$

where M is an atom of the fifth main group of the Periodic System, in particular N and P, $R_1$, $R_2$, $R_3$ and $R_4$ are identical or different aliphatic (which may contain further quaternary atoms), aromatic, heterocyclic, or aryl-aliphatic residues and in which 3-residues can be assigned in common or in pairs to heterocyclic rings, and $X^{\ominus}$ is an anion, such as $Cl^{\ominus}$, $Br^{\ominus}$, $I^{\ominus}$, $F^{\ominus}$, $NO^{\ominus}_3$, $ClO^{\ominus}_4$ ... an organic acid residue, such as acetate, ... or a complex anion, such as e.g. $BF^{\ominus}_4$, $PF^{\ominus}_6$.

3. An insulating tape as claimed in Claim 1, characterised in that the epoxy resin bonding agent contains polymeric, quaternary onium salts.

4. An insulating tape as claimed in Claim 1, 2 or 3, characterised in that the epoxy resin bonding agent-accelerator mixture contains additives which act as a hardener and which become active only at the hardening temperature of the heat-hardening epoxy resin-acid anhydride hardener impregnating mixture.

5. An insulating tape as claimed in Claim 4, characterised in that the hardener additives of the epoxy resin bonding agent are insoluble therein up to about 80 °C and have an adequately high melting point relative to the hardening temperature of the impregnating resin.

6. An insulating tape as claimed in Claim 5, characterised in that the hardener additive is 2-phenyl-4,5-dihydroxymethylimidazole.

7. An insulating tape as claimed in Claim 4, characterised in that the hardener additives are complex compounds or adducts which decompose into active hardening components only at the hardening temperature of the impregnating resin.

8. An insulating tape as claimed in Claim 4, characterised in that the hardener additives are hardener systems which are encapsulated, or are adsorbed in substances which have a large active surface, and which are released and become active only at the hardening temperature of the impregnating resin, or as a result of interchange with other compounds.

**Revendications**

1. Ruban isolant pour la fabrication d'un manchon isolant pour conducteurs électriques, notamment pour barres d'enroulement et de bobinages de machines électriques, imprégné d'un mélange thermodurcissable de résine époxydique et d'un durcisseur à base d'anhydride d'acide, constitué d'un matériau minéral plat, résistant au claquage et déposé sur un support souple, comme par exemple des lamelles de mica ou de fines couches de mica, qui sont collées au support et les unes aux autres et, le cas échéant, à une couche de finition et de couverture au moyen d'un agent adhésif contenant un accélérateur accélérant la réaction de durcissement du mélange de résine d'imprégnation, le mélange d'agent adhésif et d'accélérateur formant un mélange auto-durcissant à la température de durcissement, caractérisé en ce que des sels d'onium quaternaires sont ajoutés comme accélérateur à la résine époxydique utilisée comme agent adhésif.

2. Ruban isolant suivant la revendication 1, caractérisé en ce que l'agent adhésif contient des sels d'onium quaternaires de formule générale

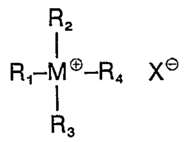

dans laquelle,

M représente des atomes du 5ème groupe principal de la classification périodique, notamment N et P,

$R_1$, $R_2$, $R_3$ et $R_4$ représentent des radicaux identiques ou différents, aliphatiques (ceux-ci pouvant contenir en outre d'autres atomes quaternaires), aromatiques, hétérocycliques ou arylaliphatiques et dans lesquels 3 radicaux peuvent appartenir ensemble ou également par paires à des noyaux hétérocycliques, et

$X^{\ominus}$ est un anion, comme $Cl^{\ominus}$, $Br^{\ominus}$, $I^{\ominus}$, $F^{\ominus}$, $NO^{\ominus}_3$, $ClO^{\ominus}_4$ ..., un radical d'acide organique, comme un acétate, ... ou un anion complexe, comme par exemple $BF^{\ominus}_4$, $PF^{\ominus}_6$, ...

3. Ruban isolant suivant la revendication 1, caractérisé en ce que l'agent adhésif à base de résine époxydique contient des sels d'onium quaternaires polymères.

4. Ruban isolant suivant la revendication 1, 2 ou 3, caractérisé en ce que le mélange d'accélérateur et d'agent adhésif à base de résine époxydique contient des additifs qui agissent en tant que durcisseur et qui ne sont efficaces qu'à la température de durcissement du mélange d'imprégnation constitué de la résine époxydique thermodurcissable et du durcisseur à base d'anhydride d'acide.

5. Ruban isolant suivant la revendication 4, caractérisé en ce que les additifs servant de durcisseur de l'agent adhésif à base de résine époxydique sont insolubles dans celui-ci jusqu'au voisinage de 80°C et ont un point de fusion suffisamment élevé par rapport à la température de durcissement de la résine d'imprégnation.

6. Ruban isolant suivant la revendication 5, caractérisé en ce que l'additif servant de durcisseur est du 2-phényl-4,5-dihydroxyméthylimidazole.

7. Ruban isolant suivant la revendication 4, caractérisé en ce que les additifs servant de durcisseur sont des composés complexes ou des produits d'addition qui ne se décomposent en des constituants efficaces pour le durcissement qu'à la température de durcissement de la résine d'imprégnation.

8. Ruban isolant suivant la revendication 4, caractérisé en ce que les additifs servant de durcisseur sont des systèmes de durcisseur encapsulés ou adsorbés sur des substances ayant de grandes surfaces spécifiques, qui ne se dégagent et ne deviennent efficaces qu'à la température de durcissement de la résine d'imprégnation ou par échange avec d'autres composés.